# EUROPEAN PATENT SPECIFICATION

(11) **EP 2 814 138 B1**
(45) Date of publication and mention of the grant of the patent: **19.05.2021**
(21) Application number: 13171456.0
(22) Date of filing: 11.06.2013
(51) Int. Cl.: H02K 1/14, H02K 1/18

(54) **Motor stator**
Stator eines Motors
Stator de moteur

(43) Date of publication of application: 17.12.2014
(73) Proprietor: Robert Bosch GmbH, 70442 Stuttgart (DE)
(72) Inventor: Jordan, Christopher Mark, Stowmarket, Suffolk IP14 2RA (GB)

(56) References cited:
- EP-A1- 2 214 296
- DE-A1-102010 028 509
- DE-A1-102010 030 877
- DE-A1-102010 036 926
- US-A1- 2009 289 522
- US-A1- 2013 093 273

## Description

The invention relates to a motor stator, and in particular to a motor stator for an electronically-commutated motor. The invention also relates to an electronically-commutated motor.

Electronically-commutated motors comprise a rotor and a stator. The rotor comprises a series of permanent magnets mounted longitudinally around a central core. The stator comprises a series of coils of wire or windings through which a current is passed to generate a stator magnetic field. This generated magnetic field interacts with that of the rotor to cause the rotor to rotate about its axis. Each stator winding is connected to an electronic control circuit which controls when each stator coil is energised, so that the stator field rotates and the motor can continue to rotate. Hall-effect sensors are typically used to determine the position of the rotor.

The stator, often referred to as a stator pack, comprises a ring of radially inwardly-directing teeth. Each tooth comprises an inwardly-projecting stem and a head at the inner end. The head of each tooth typically has a curved inner face so that the teeth as a whole define a circular aperture for the rotor to occupy. Copper wire is wound around each stator tooth stem to form each of the stator coils or windings. The stator teeth are made of a high magnetic permeability material and are usually laminated.

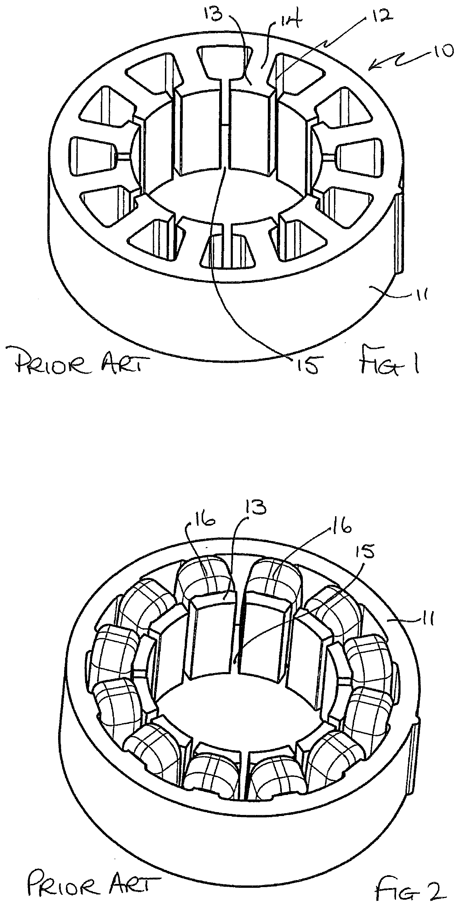

A typical stator construction is illustrated in Figures 1 and 2 in which Figure 1 schematically shows a bare stator lamination pack 10. Such a stator lamination pack is formed form a plurality of aligned steel laminations (not shown). The pack 10 has an annular outer ring or "back iron" 11 and has a plurality of radially inwardly directed teeth 12 each having a head 13 coupled to ring 11 by a stem 14. A spacing 15 is provided between adjacent teeth 12. Figure 2 shows the addition of an individual copper wire winding 16 around each stem 13.

The problem of how efficiently to wind the copper wire around the stem of each stator tooth has received attention over the years. Hand winding may be an option in some locations where employment costs are relatively low, but machine winding is usually preferable for cost, speed and consistency. However, in the case of a solid stator lamination pack such as that shown in Figure 1, the process of winding the wire is not straightforward and therefore the winding machine will be complex and relatively expensive. The speed of winding by machine is also related to the gap available between adjacent heads 13, but it is desirable to keep this gap as small as possible so that the motor efficiency is maximised.

EP 2475075 A1 provides one solution to this problem. This document discloses the formation of at least some stator teeth separately from the main stator body. These separate teeth can be wound before they are attached to the stator body, and the fixed teeth can also be more easily wound in situ due to the increased spacing while the separate teeth are absent. In addition, reference is made to the publications US2013093273 and DE102010028509 US20090289522 discloses a motor stator according to the preamble of claim 1.

The present invention seeks to improve on the prior art arrangements.

In accordance with the invention, there is provided a motor stator in accordance with claim 1.

In preferred embodiments, the retaining tooth retains the adjacent teeth on each side. The stator teeth may be provided in groups of three separately formed teeth, each group having a central retaining tooth which retains the two outer adjacent teeth.

Each tooth preferably comprises a head portion at its inner end, a base portion at its outer end which engages with the inner surface of the stator body, and a stem portion which interconnects the base portion and the head portion, the stem portion being configured to support a stator winding. In such an arrangement, the retaining tooth preferably retains the adjacent end of the base portion of the adjacent tooth. The other end of the base portion of the adjacent tooth may be retained either by another retaining tooth or by retaining means provided on the stator body, such as a radially inwardly-directed projection.

In a preferred embodiment, the radially inwardly-directed projection is wider at its inner end than its outer end and the base portion end of the adjacent tooth has a corresponding angled surface, so as to form a dovetail which retains the end of the base portion. Preferably, the angled surface has an angle of between 0° and 45° to the true radial direction, or more preferably an angle of about 10° and about 15°.

The retaining tooth may be configured to mount to the stator body in a radial insertion direction (RI).

The retaining tooth is held in the mounted position by means of a locking pin inserted in an axial direction. The locking pin engages with a hook extending radially outward from the base portion of the retaining tooth.

In preferred embodiments, the retaining tooth retains the adjacent end of the base portion of the adjacent tooth. The retaining tooth base portion and the adjacent tooth base portion are preferably provided with corresponding angled contact surfaces such that the end of the base portion of the adjacent tooth is retained in position. The retaining tooth base portion contact surface is preferably angled away from the stem portion of the tooth at an angle of between 0° and 45° to the radial insertion direction of the tooth (RI). More preferably, the angle is between about 2° and about 7°. The adjacent tooth base portion contact surface is preferably angled towards the stem portion of the tooth at an angle of between 0° and 45° to the radial insertion direction of the retaining tooth (RI). More preferably, the angle is between about 2° and about 7°.

In certain embodiments, one or more stator teeth may be formed integrally with the stator body, but preferably all stator teeth are separately formed from the stator body. The retaining and the retained teeth may alternate around the inner circumference of the stator or, as discussed above, the teeth may be provided in groups of three, each group comprising a central retaining tooth which retains the two adjacent teeth either side, with a retaining means provided on the stator body in between each group of three teeth.

In preferred embodiments, the stator body and/or the stator teeth may be laminated.

The present invention extends to an electrically-commutated motor comprising a motor stator as described above and also to a lawn care device including such a motor.

At least in its preferred embodiments, the present invention enables the stator coils to be wound onto each stator tooth before they are placed within the stator. This simplifies the coil winding process, whether by hand or machine. The present invention also permits a smaller clearance between the head portions of adjacent teeth, which improves the motor efficiency.

The mounting arrangement of the retaining tooth, for example when in the form of a hook extending radially outward from the base portion of the retaining tooth, provides improved contact between the tooth and the stator body, which minimises resistance to magnetic flux.

The location of the retaining tooth by means of a locking pin is quick, reliable and simple.

An embodiment of the invention will now be described by way of example only and with reference to the accompanying drawings, in which:
Fig. 1 is a perspective view of a prior art stator lamination pack;
Fig. 2 is a perspective view of the prior art stator lamination pack of Fig. 1 with windings added;
Fig. 3 is a perspective view of a stator in accordance with the present invention;
Figs. 4A, 4B and 4C are elevation views of part of the stator of Fig. 3, showing the mounting of the stator teeth;
Fig. 5 is a perspective view of the stator of Fig. 3 showing the insertion of a pin to retain the tooth in position; and
Fig. 6 is an elevation view of part of the stator of Fig. 3, showing the angles of various contacting surfaces.

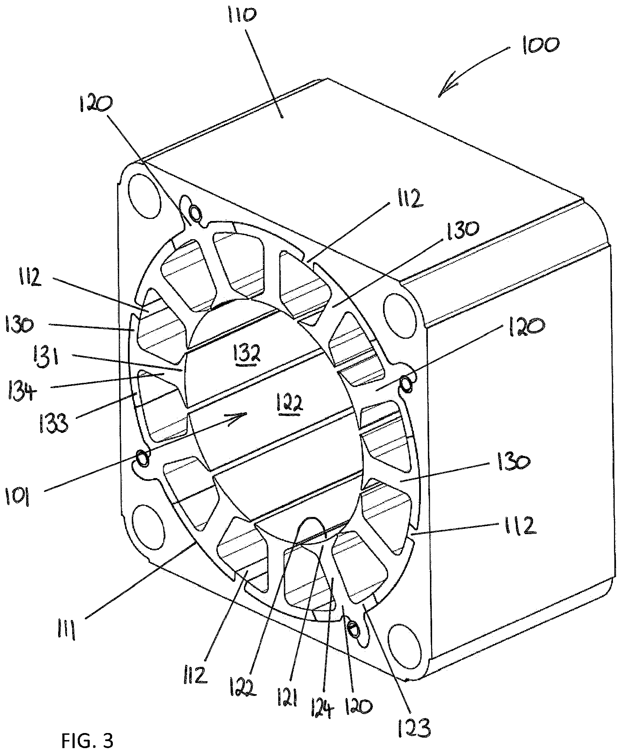

Figure 3 shows a bare stator assembly 100 in accordance with the invention. The coil windings are not shown for clarity.

Stator assembly 100 comprises a stator body 110 and a plurality of stator teeth 120, 130 projecting radially inwardly from the stator body 110. The stator teeth 120, 130 are uniformly circumferentially spaced around a central axis on which the rotor (not shown) is mounted, the teeth as a whole defining a circular aperture 101 for the rotor.

Stator body 110 has a generally square section and defines a cylindrical inner surface 111. Stator body 110 also has a number of radially inwardly-directed projections 112 which will be discussed further below.

In this preferred embodiment, all of the stator teeth 120, 130 are detachably mounted to the stator body 110, however it will be apparent to the skilled person that some of the teeth may be formed integrally with the stator body 110.

Two different types of stator teeth are provided. Retaining teeth 120 hold retained teeth 130 in position when mounted to the stator body 110. In this preferred embodiment, the stator teeth are provided in groups of three, each group having a central retaining tooth 120 which retains the two outer adjacent teeth 130. A radially inwardly-directed projection 112 is provided between each group of teeth.

The two types of teeth 120, 130 have the same general configuration. Each tooth 120, 130 comprises a head portion 121, 131 at its inner end, each head portion having a curved inner face 122, 132 so that the teeth as a whole define circular aperture 101 for the rotor to occupy. At the outer end of each tooth is provided a base portion 123, 133 which engages with the cylindrical inner surface 111 of the stator body 110. A stem portion 124, 134 interconnects the base portion 123, 133 and the head portion 121, 131, the stem portion being configured to support a stator winding as discussed above.

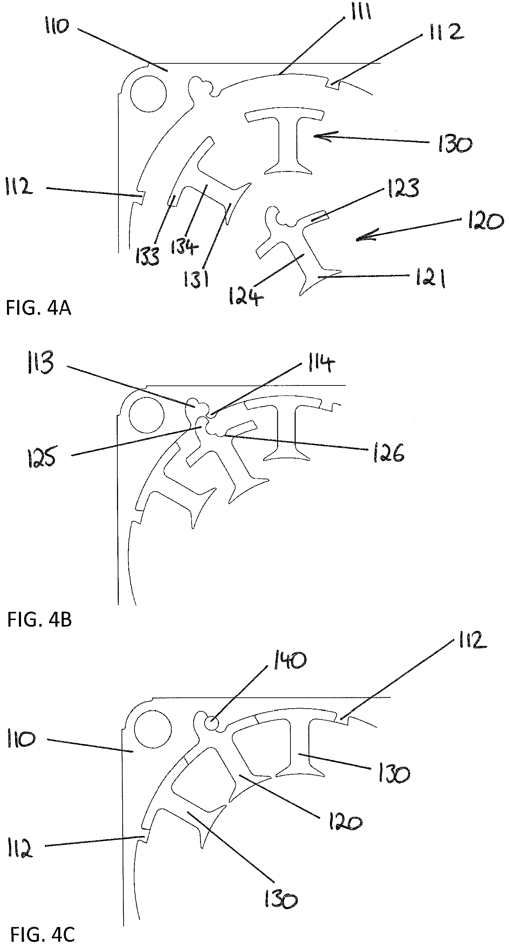

With reference to Figures 4A to 4C, the mounting arrangement of a group of three stator teeth will now be described. The teeth are shown without windings for clarity, but of course in practice stator coils will have been wound around the stem portions 124 and 134 prior to final construction of the stator assembly 100.

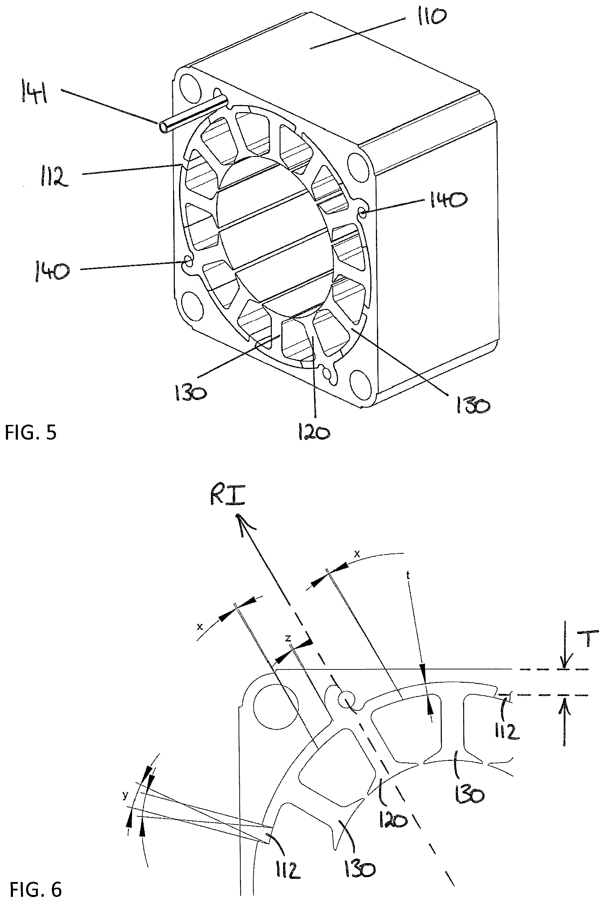

The two retained teeth 130 are first placed in position by placing the outer curved surfaces of their base portions 133 in contact with the cylindrical inner surface 111 of stator body 110. This can be achieved by moving each tooth 130 in a generally outward direction along a radius, although they could be inserted axially. In order to secure the outer ends of each base portion furthest from the retaining tooth 120, radially inwardly-directed projections 112 are wider at their radially-inward ends than their outer ends, so as to form a dovetail joint with each tooth base portion 133. A correspondingly-angled surface is provided on the end of each base portion 133, angled towards the stem portion 134 of the tooth, so that a dovetail securement is formed. Therefore, if the teeth 130 have been brought into contact with cylindrical inner surface 111 from a radial direction, a final small angular rotation will be necessary so that the dovetail surfaces of each tooth base portion 133 and projection 112 engage. The angles of the various surfaces themselves will be discussed in more detail below with reference to Figure 6.

With the retained teeth 130 in position, the retaining tooth 120 can then be mounted to the stator body 110, which will automatically secure the inner ends of each base portion 133 closest to the retaining tooth 120. Because retaining tooth base portion 123 is wider than the gap between the retained tooth head portions 121, retaining tooth 120 must first be inserted into the stator body 110 in an axial direction as shown in Figure 4B. Once in the correct axial position, the retaining tooth 120 is brought into engagement with the cylindrical inner surface 111 of stator body 110 by moving it radially outward, as shown in Figure 4C. The teeth may alternatively be wound as a group to reduce the number of connections needed. In this case, the wound group of three teeth would be inserted axially before being locked in position by the radially-outward movement of the retaining tooth 120.

The retaining tooth base portion 123 and the adjacent ends of the retained tooth base portions 133 are provided with correspondingly-angled contact surfaces such that the inner ends of the base portion 133 of each retained tooth 130 closest to the retaining tooth 120 are held in position. In this preferred embodiment, the contact surface on the end of each base portion 133 of each retained tooth 130 is angled towards the stem portion 134, and the contact surfaces on each end of the base portion 123 of the retaining tooth 120 is angled away from the stem portion 124.

In order to secure the retaining tooth 120 to the stator body 110, retaining tooth 120 is provided with a hook-shaped projection 125 (Figure 4B) extending radially-outward from the outer curved surface of base portion 123. A corresponding recess 113 is formed in the inner surface 111 of stator body 110. When retaining tooth 120 is located in the correct position within stator body 110, the hook-shaped projection 125 and the recess 113 define a circular aperture 140 (Figure 4C) which receives a cylindrical locking pin 141 (Figure 5). A locating projection 114 is also provided on the inner surface 111 of stator body 110, which engages with a recess 126 on the outer surface of base portion 123, and which serves to stop the locking pin 141 from being displaced radially inward.

The arrangement is such that the locking pin 141 locks retaining tooth 120 in the stator body 110, which in turn secures the other two teeth 130 in position. Figure 5 shows locking pin 141 being inserted into circular aperture 140.

Locking pin 141 is preferably non-conductive (or insulated from the stator body and stator teeth) in order to keep eddy current losses low. Preferably the pin 141 is resilient in its radial direction to allow an interference fit and to accommodate any variation in the clearance. Preferably, locking pin 141 is a C-pin made from glass-filled nylon.

Figure 6 shows the angles of the various contact surfaces. Angle "x" is the angle of the contact surface on each end of the base portion 123 of the retaining tooth 120 relative to the radial insertion direction RI of retaining tooth 120. It is also the angle of the corresponding contact surface on the inner end of the base portion 133 of each retained tooth 130, assuming both contact surfaces are exactly parallel. Angle "x" may be between about 0° and 45° to the radial direction. However, if it is around 0°, a small clearance and perfect alignment would be necessary. As "x" increases, retaining tooth 120 will become easier to fit and retention will be more reliable, but the corners will become increasingly sharp and therefore more difficult to tool and handle. For twelve teeth, a contact surface which is parallel to the radius along which the stem 124 lies would be 15° from the radial, which is an acceptable retention angle. Therefore, a preferred range of values for "x" is between about 2° and about 15°, or between about 2° and about 7°. Preferably, "x" is about 4°.

Angle "y" is the angle relative to the true radial direction of the dovetail feature formed between the projection 112 and the outer end of the base portion 133 of each retained tooth 130. The dovetail is ideally relatively narrow to allow the maximum slot area for the coil winding. Angle "y" could be between about 0° and 45° to the true radial direction, but when close to 0°, retention will be poor and when close to 45°, the corners will be sharp. In practice, an angle of between about 10° and about 15° is preferred.

Angle "z" is the angle of the surface on the side of the recess 113 formed in the inner surface 111 of stator body 110 which supports hook-shaped projection 125, measured relative to the radial insertion direction RI. This angle needs to be relatively small to support the hook and to prevent it from being pulled out, but greater than 0° to facilitate insertion from the radial insertion direction RI. In practice, an angle of between about 1° and about 5° is preferred.

Thickness "t" is the radial thickness of the base portion 123, 133 of both types of teeth. A value of between about 2mm and about half the total back iron thickness T at its narrowest point (see Figure 6) is preferred for "t".

## Claims

1. A motor stator comprising a stator body (110) and a plurality of stator teeth (120, 130) projecting radially inwardly from the stator body (110), wherein at least two adjacent teeth (130) are formed separately from each other and from the stator body (110) and are mountable to the stator body (110) wherein one of the teeth (120, 130) is a retaining tooth (120) which retains the adjacent tooth in position, mounted to the stator body (110), when the retaining tooth (120) is mounted to the stator body (110), wherein the retaining tooth (120) is held in the mounted position by means of a locking pin (141) inserted in an axial direction into the stator body (110),
**characterised in that** the locking pin engages with a hook (125) extending radially outward from a base portion (133) of the retaining tooth (120).

2. The motor stator of claim 1, wherein the retaining tooth (120) retains an adjacent tooth (130) on each side of the retaining tooth (120).

3. The motor stator of claim 2, wherein the stator teeth (120, 130) are provided in groups of three separately formed teeth (120, 130), each group having a central retaining tooth (120) which retains the two outer adjacent teeth (130).

4. The motor stator of any preceding claim, wherein each tooth (120, 130) comprises a head portion (121, 131) at its inner end, a base portion (123, 133) at its outer end which engages with the inner surface (110) of the stator body (110), and a stem portion (124, 134) which interconnects the base portion (123, 133) and the head portion (121, 131), the stem portion (124, 134) being configured to support a stator winding (16).

5. The motor stator of claim 4, wherein the retaining tooth (120) retains the adjacent end of the base portion (133) of the adjacent tooth (130) and wherein the other end of the base portion (133) of the adjacent tooth (130) is retained either by another retaining tooth (120) or by retaining means provided on the stator body (110).

6. The motor stator of claim 5, wherein the other end of the base portion (133) of the adjacent tooth (130) is retained by retaining means provided on the inner surface (111) of the stator body (110) which comprises a radially inwardly-directed projection (112).

7. The motor stator of claim 6, wherein the projection (112) is wider at its inner end than its outer end so as to form a dovetail which retains the end of the base portion (133) of the adjacent tooth (130), and wherein the base portion (135) end of the adjacent tooth (130) has a corresponding angled surface.

8. The motor stator of claim 7, wherein the angled surface has an angle of between 0° and 45° to the radial direction.

9. The motor stator of any preceding claim, wherein the retaining tooth (120) is configured to mount to the stator body (110) in a radial insertion direction (RI).

10. The motor stator of claim 4, wherein the retaining tooth (120) retains the adjacent end of the base portion (133) of the adjacent tooth (130).

11. The motor stator of claim 10, wherein the retaining tooth (120) base portion (123) and the adjacent tooth (130) base portion (133) are provided with corresponding angled contact surfaces, wherein the contact surface of the retained tooth is angled towards the stem portion and the contact surface of the retaining tooth is angled away from the stem portion such that the end of the base portion of the adjacent tooth is retained in position.

12. The motor stator of claim 11, wherein the retaining tooth (120) base portion (123) contact surface is angled away from the stem portion (124) of the tooth (120) at an angle of above 0° and up to 45° to the radial insertion direction (RI) of the tooth (120).

13. The motor stator of claim 10 or 11, wherein the adjacent tooth (130) base portion contact surface is angled towards the stem (134) portion of the tooth (130) at an angle of above 0° and up to 45° to the radial insertion direction (RI) of the retaining tooth (120).

14. A motor comprising a motor stator as claimed in any preceding claim.

15. A lawn care device including the motor of claim 14.

## Patentansprüche

1. Motorstator, einen Statorkörper (110) und mehrere Statorzähne (120, 130), die vom Statorkörper (110) radial nach innen vorstehen, umfassend, wobei mindestens zwei aneinander angrenzende Zähne (130) voneinander und vom Statorkörper (110) getrennt ausgebildet sind und am Statorkörper (110) montierbar sind, wobei einer der Zähne (120, 130) ein Haltezahn (120) ist, der den angrenzenden Zahn in seiner Position, am Statorkörper (110) montiert, hält, wenn der Haltezahn (120) am Statorkörper (110) montiert ist, wobei der Haltezahn (120) über einen Sperrstift (141), der in Axialrichtung in den Statorkörper (110) eingesetzt ist, in der montierten Stellung gehalten wird,
**dadurch gekennzeichnet, dass**
der Sperrstift in einen Haken (125) eingreift, der sich von einem Basisabschnitt (133) des Haltezahns (120) radial nach außen erstreckt.

2. Motorstator nach Anspruch 1, wobei der Haltezahn (120) einen angrenzenden Zahn (130) auf beiden Seiten des Haltezahns (120) hält.

3. Motorstator nach Anspruch 2, wobei die Statorzähne (120, 130) in Gruppen dreier getrennt ausgebildeter Zähne (120, 130) vorgesehen sind, wobei jede Gruppe einen mittigen Haltezahn (120) aufweist, der die zwei äußeren angrenzenden Zähne (130) hält.

4. Motorstator nach einem der vorstehenden Ansprüche, wobei jeder Zahn (120, 130) einen Kopfabschnitt (121, 131) an seinem inneren Ende, einen Basisabschnitt (123, 133) an seinem äußeren Ende, der in die Innenfläche (110) des Statorkörpers (110) eingreift, und einen Stammabschnitt (124, 134), der den Basisabschnitt (123, 133) mit dem Kopfabschnitt (121, 131) verbindet, umfasst, wobei der Stammabschnitt (124, 134) dazu ausgelegt ist, eine Statorwicklung (16) zu tragen.

5. Motorstator nach Anspruch 4, wobei der Haltezahn (120) das angrenzende Ende des Basisabschnitts (133) des angrenzenden Zahns (130) hält und wobei das andere Ende des Basisabschnitts (133) des angrenzenden Zahns (130) entweder von einem anderen Haltezahn (120) oder über eine am Statorkörper (110) vorgesehene Halteeinrichtung gehalten wird.

6. Motorstator nach Anspruch 5, wobei das andere Ende des Basisabschnitts (133) des angrenzenden Zahns (130) über die Halteeinrichtung, die auf der Innenfläche (111) des Statorkörpers (110) vorgesehen ist, die einen radial nach innen gerichteten Vorsprung (112) umfasst, gehalten wird.

7. Motorstator nach Anspruch 6, wobei der Vorsprung (112) an seinem inneren Ende breiter als an seinem äußeren Ende ist, um einen Schwalbenschwanz auszubilden, der das Ende des Basisabschnitts (133) des angrenzenden Zahns (130) hält, und wobei das Ende des Basisabschnitts (135) des angrenzenden Zahns (130) eine zugehörige angewinkelte Fläche aufweist.

8. Motorstator nach Anspruch 7, wobei die angewinkelte Fläche einen Winkel zwischen 0° und 45° in Radialrichtung aufweist.

9. Motorstator nach einem der vorstehenden Ansprüche, wobei der Haltezahn (120) dazu ausgelegt ist, in eine radiale Einsetzrichtung (RI) an den Statorkörper (110) montiert zu werden.

10. Motorstator nach Anspruch 4, wobei der Haltezahn (120) das angrenzende Ende des Basisabschnitts (133) des angrenzenden Zahns (130) hält.

11. Motorstator nach Anspruch 10, wobei der Basisabschnitt (123) des Haltezahns (120) und der Basisabschnitt (133) des angrenzenden Haltezahns (130) mit zugehörigen angewinkelten Kontaktflächen versehen sind, wobei die Kontaktfläche des Haltezahns zum Stammabschnitt hin angewinkelt ist und die Kontaktfläche des Haltezahns vom Stammabschnitt weg angewinkelt ist, sodass das Ende des Basisabschnitts des angrenzenden Zahns in seiner Position gehalten wird.

12. Motorstator nach Anspruch 11, wobei die Kontaktfläche des Basisabschnitts (123) des Haltezahns (120) vom Stammabschnitt (124) des Zahns (120) in einem Winkel zwischen 0° und 45° zur radialen Einsetzrichtung (RI) des Zahns (120) weg angewinkelt ist.

13. Motorstator nach Anspruch oder 10 oder 11, wobei die Kontaktfläche des Basisabschnitts des angrenzenden Zahns (130) zum Stammabschnitt (134) des Zahns (130) in einem Winkel zwischen 0° und 45° zur radialen Einsetzrichtung (RI) des Zahns (120) hin angewinkelt ist.

14. Motor, einen Motorstator nach einem der vorstehenden Ansprüche umfassend.

15. Rasenpflegevorrichtung, den Motor nach Anspruch 14 umfassend.

## Revendications

1. Stator de moteur, comprenant un corps de stator (110) et une pluralité de dents de stator (120, 130) faisant saillie radialement vers l'intérieur à partir du corps de stator (110), dans lequel au moins deux dents adjacentes (130) sont formées séparément l'une de l'autre et du corps de stator (110) et sont montables sur le corps de stator (110), dans lequel une des dents (120, 130) est une dent de retenue (120) qui retient la dent adjacente en position, montée sur le corps de stator (110), lorsque la dent de retenue (120) est montée sur le corps de stator (110), dans lequel la dent de retenue (120) est retenue dans la position montée au moyen d'une goupille de verrouillage (141) insérée dans une direction axiale dans le corps de stator (110),
**caractérisé en ce que**
la goupille de verrouillage entre en prise avec un crochet (125) s'étendant radialement vers l'extérieur à partir d'une partie de base (133) de la dent de retenue (120).

2. Stator de moteur selon la revendication 1, dans lequel la dent de retenue (120) retient une dent adjacente (130) sur chaque côté de la dent de retenue (120).

3. Stator de moteur selon la revendication 2, dans lequel les dents de stator (120, 130) sont prévues en groupes de trois dents séparément formées (120, 130), chaque groupe ayant une dent de retenue centrale (120) qui retient les deux dents adjacentes extérieures (130).

4. Stator de moteur d'une quelconque revendication précédente, dans lequel chaque dent (120, 130) comprend une partie de tête (121, 131) à son extrémité intérieure, une partie de base (123, 133) à son extrémité extérieure qui entre en prise avec la surface intérieure (110) du corps de stator (110), et une partie de tige (124, 134) qui raccorde mutuellement la partie de base (123, 133) et la partie de tête (121, 131), la partie de tige (124, 134) étant configurée pour supporter un enroulement de stator (16).

5. Stator de moteur selon la revendication 4, dans lequel la dent de retenue (120) retient l'extrémité adjacente de la partie de base (133) de la dent adjacente (130) et dans lequel l'autre extrémité de la partie de base (133) de la dent adjacente (130) est retenue par une autre dent de retenue (120) ou par des moyens de retenue prévus sur le corps de stator (110).

6. Stator de moteur selon la revendication 5, dans lequel l'autre extrémité de la partie de base (133) de la dent adjacente (130) est retenue par des moyens de retenue prévus sur la surface intérieure (111) du corps de stator (110) qui comprend une saillie dirigée radialement vers l'intérieur (112).

7. Stator de moteur selon la revendication 6, dans lequel la saillie (112) est plus large à son extrémité intérieure qu'à son extrémité extérieure afin de former une queue d'aronde qui retient l'extrémité de la partie de base (133) de la dent adjacente (130), et dans lequel l'extrémité de la partie de base (135) de la dent adjacente (130) a une surface inclinée correspondante.

8. Stator de moteur selon la revendication 7, dans lequel la surface inclinée a un angle d'entre 0° et 45° par rapport à la direction radiale.

9. Stator de moteur d'une quelconque revendication précédente, dans lequel la dent de retenue (120) est configurée pour monter sur le corps de stator (110) dans une direction d'insertion radiale (RI).

10. Stator de moteur selon la revendication 4, dans lequel la dent de retenue (120) retient l'extrémité adjacente de la partie de base (133) de la dent adjacente (130).

11. Stator de moteur selon la revendication 10, dans lequel la partie de base (123) de la dent de retenue (120) et la partie de base (133) de la dent adjacente (130) sont pourvues de surfaces contact inclinées correspondantes, dans lequel la surface de contact de la dent retenue est inclinée vers la partie de tige et la surface de contact de la dent de retenue est inclinée à l'opposé de la partie de tige de telle sorte que l'extrémité de la partie de base de la dent adjacente soit retenue en position.

12. Stator de moteur selon la revendication 11, dans lequel la surface de contact de la partie de base (123) de la dent de retenue (120) est inclinée à l'opposé de la partie de tige (124) de la dent (120) à un angle supérieur à 0° et allant jusqu'à 45° par rapport à la direction d'insertion radiale (RI) de la dent (120).

13. Stator de moteur selon la revendication 10 ou 11, dans lequel la surface de contact de partie de base de la dent adjacente (130) est inclinée vers la partie de tige (134) de la dent (130) à un angle supérieur à 0° et allant jusqu'à 45° par rapport à la direction d'insertion radiale (RI) de la dent de retenue (120).

14. Moteur, comprenant un stator de moteur selon une quelconque revendication précédente.

15. Dispositif d'entretien pour gazon, incluant le moteur selon la revendication 14.
